# EUROPEAN PATENT APPLICATION

(11) **EP 4 560 376 A1**
(43) Date of publication of application: **28.05.2025**
(21) Application number: 23211326.6
(22) Date of filing: 21.11.2023
(51) Int. Cl.: G02B 19/00, G02B 21/08, G02B 27/09, G02B 21/00

(54) **ILLUMINATION ELEMENTS, ILLUMINATION SYSTEM AND OPTICAL IMAGING SYSTEM**

(71) Applicant: Leica Instruments (Singapore) Pte. Ltd., Singapore 608924 (SG)
(72) Inventor: WEIGER, Ulrich, Singapore 608924 (SG)
(74) Representative: 2SPL Patentanwälte PartG mbB

(57) **Abstract**

An example provides an illumination element for an optical imaging system comprising a first surface configured to receive a light beam and a second surface opposing the first surface. The second surface is configured to transmit a formed light beam. An area of the second surface is greater than an area of the first surface. Further, the illumination element comprises a lateral surface comprising a plurality of surface points. At a cross-section a distance of at least two surface points of the plurality of surface points to a center point of the lateral surface is different from each other.

## Description

### Technical field

Examples relate to illumination elements, an illumination system and an optical imaging system.

### Background

An illumination lens in a microscope serves the crucial purpose of directing and controlling light onto the sample. By focusing and evenly distributing light, it enhances sample visibility, contrast, and resolution, enabling precise observations and high-quality imaging, making it an essential component for microscopy.

The display device, e.g., an eyepiece, on the other hand, is a separate component in the microscope's optical system. The eyepiece is responsible for magnifying the image created by the at least objective lens and presenting it to the observer's eye.

While the illumination lens and eyepiece are both integral to the functioning of a microscope, they have distinct roles and are not typically directly adapted to each other. The illumination lens ensures proper lighting of the sample, while the eyepiece is responsible for allowing the viewer to observe the sample details. These components work together within the microscope to provide a complete and effective microscopy system. However, missing adaption of the illumination lens to the display device may cause alignment issues and/or a loss of light.

Thus, there may be a need to improve an adaption of an illumination lens and a display device.

### Summary

It is a finding of the inventors that an illumination element can be provided with a non-circular cross-section. For example, the cross-section of the illumination element may be configured to form a light distribution in an object field with at least partially parallel opposing sides. For example, the light distribution in the object field may be substantially rectangular. That is, an area of a sample illuminated by the illumination element may be substantially rectangular. In this way, the illuminated area of the sample can be adjusted to a display device, e.g., a rectangular display device.

Examples provide an illumination element for an optical imaging system comprising a first surface configured to receive a light beam and a second surface opposing the first surface. The second surface is configured to transmit a formed light beam. An area of the second surface, e.g., a footprint or a base area, is greater than an area of the first surface. Further, the illumination element comprises a lateral surface comprising a plurality of surface points. At a cross-section a distance of at least two surface points of the plurality of surface points to a center point of the lateral surface is different from each other. That is, the cross-section may have at least two surface points which are not arranged on a diameter. Thus, at least two surface point are not arranged on a circular shape. The plurality of surface points may define an outer dimension of the lateral surface. For example, the plurality of surface points may define a dimension of a cross-section of the lateral surface. That is, the plurality of surface points may form a boundary of the lateral surface. Since the shape of the lateral surface deviates from a circular shape, the illuminated area of the sample in the object field may also deviate from a circular shape. Thus, by adjusting the cross-section of the lateral surface and optionally the second surface, the illuminated area and object field can be adjusted, e.g., adapted to a display device. By varying the ratio between the area of the second surface and the area of the first surface, the illuminated area in the object field can be varied relative to the size of an illumination source. For example, the illumination element may be designed in that way, that it collects light emitted from an illumination source and forms a light distribution, which forms a desired illumination of the sample in the object field, e.g., a rectangular light distribution, a non-circular light distribution. For example, a rectangular light distribution can be used to display an acquired image on a rectangular display device.

In an example, a shape of the cross-section may be non-circular. That is, in contrast to classical circular light distributions in the object field, the illuminated area of the sample can be adjusted using the illumination element to account for a non-circular display device.

In an example, a shape of the cross-section may be substantially rectangular. In this way, an acquired image can be adapted to a substantially rectangular display device.

In an example, a perimeter of the cross-section may comprise a discontinuity. For example, the cross-section may comprise an edge. In this way, the cross-section of the illumination element can be adjusted to a rectangular display device in a facilitated way.

Examples provide an illumination element for an optical imaging system comprising a first surface configured to receive a light beam and the second surface opposing the first surface. The second surface is configured to transmit a formed light beam. An area of the second surface, e.g., a footprint or a base area, is greater than an area of the first surface. Further, the illumination element comprises a lateral surface. A shape of the lateral surface and, optionally, of the second surface is configured to form the received light beam into the formed light beam such that a light distribution in the object field of the optical imaging system has two sides which are at least partially parallel. That is, the light distribution in the object field may be non-circular. For example, the light distribution in the object field may be substantially rectangular. Since the shape of the lateral surface may be configured to generate a non-circular light distribution in the object field, the light distribution can be adapted to a display device. In this way, the illumination element or the light distribution in the object field provided by the illumination element can be adapted to the display device.

In an example, the light distribution may exhibit a substantially rectangular shape in the object field of the optical imaging system. In this way, an acquired image can be adapted to a substantially rectangular display device.

In an example, the light distribution may exhibit a non-round shape. That is, the light distribution may be non-circular. Thus, an acquired image can be adapted to a non-circular display device.

In an example, the second surface may have a rectangular shape. In this way, a rectangular light distribution in object field can be generated in a facilitated way.

In an example, the lateral surface may have at least partially a parabolic shape. The at least partially parabolic shape may facilitate the generation of a non-circular light distribution.

In an example, the lateral surface may comprise at least two facets along the perimeter of the cross-section. The at least two facets may facilitate the generation of a non-circular light distribution.

In an example, the lateral surface may comprise at least two facets along an axial direction of the illumination element. The at least two facets may facilitate the generation of non-circular light distribution.

In an example, the first surface may have a rectangular shape. Thus, the first surface can be adapted to an illumination source, e.g., a rectangular light imaging diode.

Embodiments provide an illumination system comprising the illumination element as described above and an objective lens. The objective lens is arranged along an optical path of the optical imaging system after the illumination element. The objective lens can be configured to generate a desired light distribution in the object field in conjunction with the illumination element. Thus, arranging the objective lens along the optical path after the illumination element may allow a generation of the light distribution in an improved and/or facilitated way and/or may allow, that imaged and illuminated object field is concentric at all distances).

In an example, the illumination element and objective lens may be arranged such that the light distribution of the formed light beam is concentric in the object field. In this way, the usage of different working distances can be facilitated.

In an example, the light distribution of the formed light beam is concentric in the object field for different working distances of the optical imaging system. Thus, the working distance of the optical imaging system can be adjusted without a need to compensate the light distribution in the object field.

In an example, the illumination element may be arranged in a line along the optical path of the optical imaging system. In this way, a coaxial illumination can be achieved.

In an example, the illumination element and the objective lens may be arranged along an optical axis of the optical imaging system. In this way, an arrangement of the illumination element with respect to the objective lens can be facilitated.

In an example, the illumination system may comprise a light source. The illumination element may be arranged along the optical path between the light source and the objective lens. In this way, a concentricity can be set in a facilitated way.

In an example, an emitting surface of the light source may have the same dimension as the first surface of the illumination element. That is, the first surface of the illumination element may be adapted to the emitting surface of the light source.

In an example, the illumination system may comprise a further illumination element. The illumination element and the further illumination element may be arranged at the same position along an optical axis of the optical imaging system and for respectively reducing a deviation from the optical axis. For example, the first illumination element and the illumination element may be arranged next to each other in such a way that a distance of the respective center points to the optical path is reduced, e.g., reduced to a minimum. In this way, it can be ensured that the illumination element and the further illumination element are as close as possible to the optical path.

Examples provide an optical imaging system comprising an illumination element as described above or an illumination system as described above.

In an example, the optical imaging system may be a stereoscopic surgical microscope.

### Short description of the Figures

Some examples of apparatuses and/or methods will be described in the following by way of example only, and with reference to the accompanying figures, in which
Fig. 1 shows a schematic view of an example of an illumination element for an optical imaging system;
Figs. 2a and 2b show schematic view of illumination systems for optical imaging systems;
Fig. 3 shows a simulation of a light distribution in an object field using an illumination element according to Fig. 1 or an illumination system according to Fig. 2; and
Fig. 4 shows a schematic illustration of a system.

### Detailed Description

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Various examples will now be described more fully with reference to the accompanying drawings in which some examples are illustrated. In the figures, the thicknesses of lines, layers and/or regions may be exaggerated for clarity.

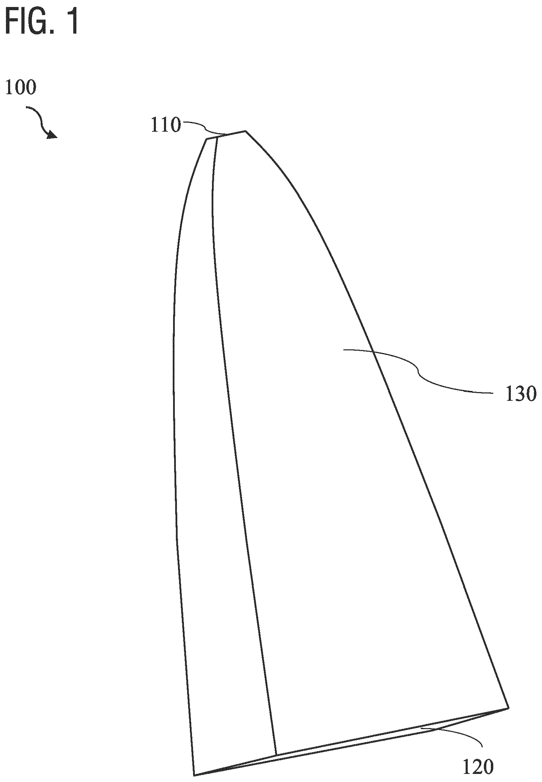

Fig. 1 shows a schematic view of an example of an illumination element 100 for an optical imaging system. The illumination system 100 comprises a first surface 110 configured to receive a light beam. The light beam may be a concentrated and directional flow of electromagnetic radiation in the form of light, e.g., visible light, infrared light. The light beam may be for illumination of a sample. For example, the light beam may be generated by and transmitted from an illumination source, e.g., of an optical imaging system. For example, the illumination element 100 and the illumination source may be part of an optical imaging system.

The first surface 110 is configured to receive the light beam. For example, a curvature, a coating, an alignment along an optical path, a center of the curvature, a material and/or shape, e.g., cross-section, of the first surface 110 may be designed to receive the light beam. For example, the first surface 110 may comprise an anti-reflective coating, which can reduce light reflection and may reduce loss. For example, a footprint of the first surface 110 may be adapted to a dimension of the light beam to be received.

Since the illumination element 100 may be for guiding and shaping the light beam, the illumination system 100 may comprise a surface configured to transmit an altered light beam. The illumination the element 100 comprises a second surface 120 opposing the first surface 110. The second surface 120 is configured to transmit a formed light beam. For example, a curvature, a coating, an alignment along an optical path, a center of the curvature, a material and/or shape, e.g., cross-section, of the second surface 120 may be designed to transmit the formed light beam.

The formed light beam may be different from the received light beam. For example, a width and/or a height of the formed light beam may be different, e.g., larger or smaller, than that of the received light beam. That is, the received light beam can be changed by the illumination element 100 to transmit the formed light beam, e.g., to achieve a desired light distribution in an object field.

An area of the second surface 120, e.g., a footprint or a base area, is greater than an area of the first surface 110. Thus, an outer dimension of the formed light beam may be greater than an outer dimension of the received light beam. That is, the illumination element 100 may change the received light beam by widening the width and/or height of it, for example.

Further, the illumination element 100 comprises a lateral surface 130. The lateral surface 130 may comprise a plurality of surface points. A surface point is a point located on a surface of a three-dimensional object such as the illumination element 100. For example, a surface point may be simply a point that lies on the outer lateral boundary of the illumination element 100. That is, the surface point may be a location on a lateral surface 130 of the illumination element 100. At a cross-section a distance of at least two surface points of the plurality of surface points to a center point of the lateral surface 130 is different from each other. The center point may be a geometric center, a centroid or a midpoint of the lateral surface 130. That is, a perimeter of the lateral surface 130 may have at least two points which are not arranged on the same diameter with respect to the center point. Thus, the cross-section may be not point symmetric with respect to the center point.

Since the cross-section of the lateral surface 130 is not point symmetric, the formed light beam may lead to a light distribution in the object field which is also not point symmetric. That is, the light distribution in the object field can be shaped by the lateral surface 130 of the illumination element 100. By deviation from a point symmetric cross-section the light distribution in the object field may also deviate from a point symmetric light distribution. In this way, the light distribution in the object field can be adapted to a shape of a display device. For example, a light distribution in the object field can be adapted such that it is substantially rectangular. Thus, an image of a rectangular area of the sample can be acquired using the illumination element 100. In this way, the illuminated area of the sample can be adapted to a rectangular display device.

The illumination system of a classical optical imaging system may be designed for a circular illumination, which fits good for a classic eyepiece view. However, when using a rectangular display device such like a screen, it doesn't, which may cause alignment issues and/or a loss of light. It is a finding of the inventors that the illumination of the sample can be adapted with respect to a shape of the display device. That is, a shape of the light distribution in the object field can be adapted to a shape of the display device. In this way, a shape of an illuminated area of the sample can be adjusted to a shape of the display device, which may reduce a loss of light and/or alignment issues.

For example, the illumination element 100 may be designed in that way, that it collects the light emitted from a light source, e.g., rectangular shaped light imaging diode, efficiently and forms a light distributions, which, after optionally directed through an objective lens, forms a rectangular light distribution to the object field, especially a concentric light distribution if directed through an objective lens.

In an example, a shape of the cross-section of the lateral surface 130 may be non-circular. Optionally, a shape of the cross-section of the lateral surface 130 may be non-elliptical. In an example, a shape of the cross-section of the lateral surface 130 may be substantially rectangular. Substantially rectangular may mean that the shape is close to being a perfect rectangle but may have slight deviations or variations from a purely rectangular form. The shape may resemble a rectangle in its general appearance and characteristics, but it is not precisely or entirely rectangular. For example, substantially rectangular might refer to shape mostly rectangular which may have slightly irregular boundaries or angles that prevent it from being a perfect rectangle, e.g., an edge may be cut off.

In an example, a perimeter of the cross-section may comprise a discontinuity. For example, for a geometric shape with an edge a slope of that edge changes drastically, creating a sharp corner or inflection point. This change in the edge's direction can be regarded as a discontinuity in the perimeter. That is, the discontinuity may signify a significant change in the boundary of the lateral surface 130, which may affect how to calculate the shape's total perimeter. For example, the discontinuity may comprise or may be formed by an edge of the lateral surface 130. Thus, the discontinuity may allow to shape the light distribution in the object field in a facilitated way.

As described above, the lateral surface 130 may comprise a plurality of surface points. Alternatively, a shape of the lateral surface 130 may be configured to form the received light beam into the formed light beam. That is, the received light beam may be altered by the shape of the lateral surface 130 of the illumination element 100. Thus, the shape of the lateral surface 130 may define a change of the received light beam. Therefore, the formed light beam can be defined by the shape of the lateral surface 130. For example, a shape of the formed light beam may depend on the shape of the lateral surface 130.

The lateral surface 130 may form the formed light beam such that a light distribution in the object field of an optical imaging system has two sides which are at least partially parallel. That is, the light distribution may deviate from a circular or elliptical light distribution. In this way, the light distribution can be adapted to a display device. For example, the light distribution may have a rectangular shape. For example, an outer dimension of a cross-section of the lateral surface 130, a curvature of the lateral surface 130 or an area of the lateral surface 130, a width of the lateral surface 130, a height of the lateral surface 130 and/or a material may define the light distribution in the object field. For example, the lateral surface 130 may have a rectangular cross-section, which may support and/or lead to an occurrence of a rectangular light distribution in the object field. For example, the lateral surface 130 may have a width and/or height aspect ratio, which may support and/or lead to an occurrence of two sides which are at least partially parallel with a desired aspect ratio. For example, a material of the lateral surface 130 may allow total internal reflection, which may facilitate a design of the light distribution. Thus, the shape of the light distribution in the object field may depend on multiple parameters of the shape and/or material of the lateral surface 130. The shape of the lateral surface 130 may comprise outer dimensions of the lateral surface 130, e.g., the footprint, and/or a shape of a surface of the lateral surface 130, e.g., curvature of an area of the lateral surface 130, e.g., a facet of the lateral surface 130.

In an example, the light distribution may exhibit a substantially rectangular shape in the object field of the optical imaging system. In this way, an acquired image can be adapted to a substantially rectangular display device. In an example, the light distribution may exhibit a non-round shape. That is, the light distribution may be non-circular. Optionally the light distribution may be non-elliptical. Thus, an acquired image can be adapted to a non-circular or optionally to a non-elliptical display device.

In an example, the second surface 120 may have a rectangular shape. Alternatively, the second surface 120 may have a non-circular or non-elliptical shape. For example, a shape of the second surface 120 may be configured to form the formed light beam. That is, the transmitted formed light beam may be generated by altering the received light beam through the lateral surface 130 and, optionally, the second surface 120. Forming a non-circular light distribution in the object field can be facilitated using the second surface 120. For example, a shape of the second surface 120 may influence the light distribution in the object field. That is, a non-circular second surface 120 may support an occurrence of a non-circular light distribution in the object field. For example, a rectangular shape of the second surface 120 may support an occurrence of a rectangular light distribution in the object field. In this way, a non-circular light distribution in object field can be generated in a facilitated way.

In an example, the lateral surface 130 may have at least partially a parabolic shape. For example, a part of the lateral surface 130 such as a side surface or a part of the side surface may have a parabolic shape. In an example, the lateral surface 130 may comprise at least two facets along the perimeter of the cross-section. For example, the lateral surface 130 may comprise two side surfaces and each side surface may comprise one facet. In an example, the lateral surface 130 may comprise at least two facets along an axial direction of the illumination element 100. That is, a side surface of the lateral surface 130 may comprise at least two facets. The facets may facilitate forming the formed light beam. For example, a precision of a generation of the shape of the light distribution in the object field can be improved using multiple facets.

In an example, the first surface 110 may have a rectangular shape. For example, the light beam may have a rectangular shape, e.g., the light beam may be transmitted from a rectangular light source such as a light emitting diode. Using a rectangular shape of the first surface 110 may allow to improve the reception of the light beam. For example, a cross-section of the first surface 110 can be adapted to a dimension of the light beam. In this way, misalignment issues and/or loss of light can be reduced.

The illumination element 100 can be used to adjust a shape of the received light beam. In this way, a light distribution in the object field can be adjusted using the illumination element 100. For example, the illumination element 100 can also be referred to as an optical component configured to refract and/or focus a light beam, e.g., configured for beam shaping. Beam shaping may generally refer to modifying the spatial or angular distribution of light. That is, the illumination element 100 may be configured to shape the received light beam to a formed light beam such that a light distribution in an object field is different from a circular shape or an elliptical shape.

The illumination element 100 or the lateral surface 130 of the illumination element 100 may comprise or may be made of a material allowing internal reflection or optionally total internal reflection. For example, the illumination element 100 may be surrounded by air. Optionally, the illumination coating may be coated with a reflection coating.

To achieve internal reflection in the illumination element 100 surrounded by air materials with a refractive index lower than that of the surrounding air may be used. To achieve total internal reflection in the illumination element 100 a material with a higher refractive index than the surrounding medium, e.g., air, may be used. Total internal reflection causes the light to be completely reflected back into the higher refractive index material. For example, the illumination element 100 may comprise or may be made of glass, acrylic and/or plastic.

For example, the illumination element 100 may be a full-body, i.e., the illumination element 100 may be completely filled. Alternatively, the illumination element 100 may comprise a cavity.

A material of the first surface 110, the second surface 120 and the lateral surface 130 may be identical. Alternatively, a material of the first surface 110, the second surface 120 and the lateral surface 130 may be different, e.g., to compensate for chromatic aberration.

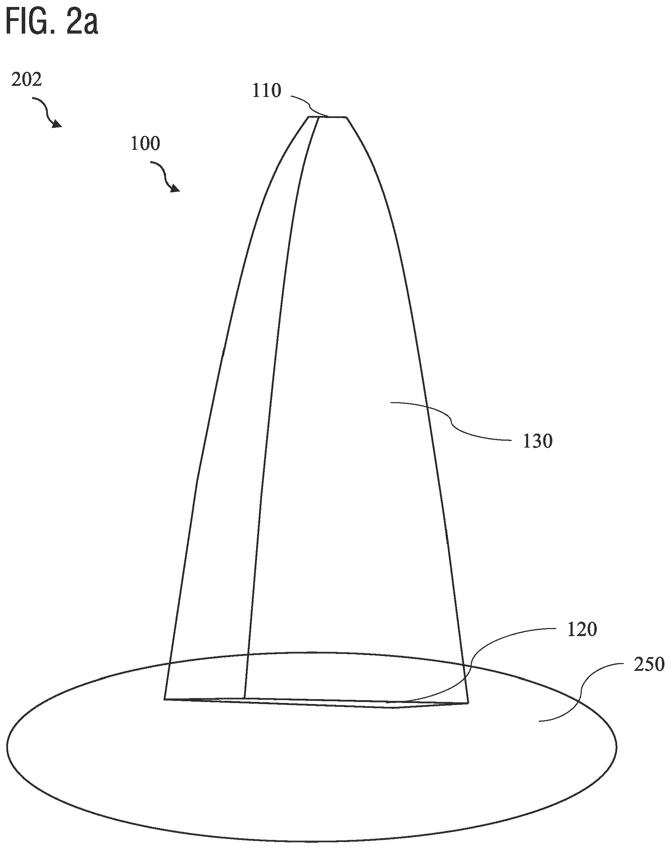

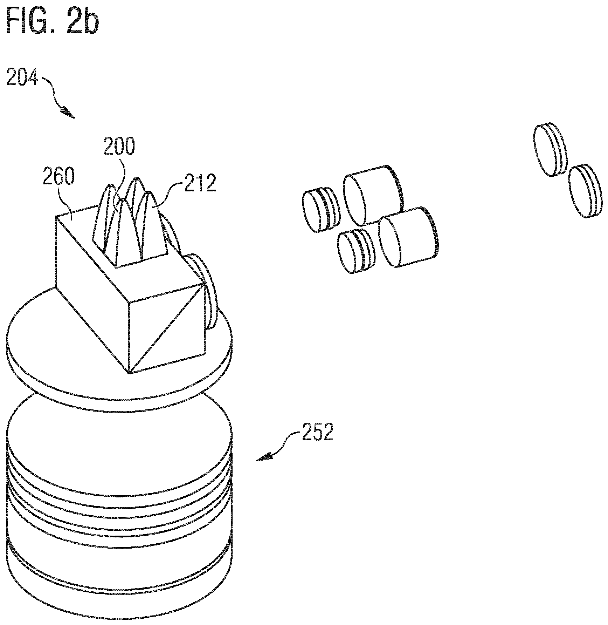

More details and aspects are mentioned in connection with the examples described below. The example shown in Fig. 1 may comprise one or more optional additional features corresponding to one or more aspects mentioned in connection with the proposed concept or one or more examples described below (e.g., Fig. 2 - 4).

Figs. 2a and 2b show schematic view of illumination systems 202, 204 for optical imaging systems. As can be seen in Fig. 2a, the illumination system 202 comprises an illumination element 100 as described with reference to Fig. 1 and an objective lens 250. The objective lens 250 is arranged along an optical path of the optical imaging system after the illumination element 100. For example, the objective lens 250 may be arranged between the illumination element 100 and an object field of an optical imaging system. The objective lens 250 may be used to shape the light distribution in the object field. That is, the light distribution in the object field can optionally be formed by the objective lens 250. The objective lens 250 may support an occurrence of a non-circular light distribution in the object field, for example.

In an example, the illumination element 100 and the objective lens 250 may be arranged such that the light distribution of the formed light beam is concentric in the object field. That is, concentric illumination of the sample in the object field can be achieved. For example, the objective lens 250 and the illumination element 100 may be arranged next to each other, such that the second surface 120 may face the objective lens 250. In an example, the light distribution of the formed light beam is concentric in the object field for different working distances of the optical imaging system. Thus, the working distance of the optical imaging system can be adjusted without a need to compensate the light distribution in the object field.

For example, the objective lens 250 may be configured to generate the concentric illumination in the object field. Concentric illumination may mean that the light is focused in such a way that the illumination pupil is perfectly aligned or centered with the optical axis of the objective lens 250. This alignment may ensure that light is uniformly distributed and focused on the sample, which is important for obtaining clear and well-defined images in microscopy or optical systems where precise illumination is required.

For example, the objective lens 250 can ensure that the illumination pupil (where light is focused onto the sample) and the focus pupil (where the sample is in focus for imaging) are concentric or coincident. This alignment may ensure that the sample is illuminated and imaged at the same location, resulting in a clear and well-focused image. This setup may allow to illuminate deep cavities.

In an example, the illumination element 100 may be arranged in a line along the optical path of the optical imaging system. For example, the illumination element 100 may be arranged on a line between the sample and the illumination source. In this way, a concentricity can be set in a facilitated way.

In an example, the illumination element 100 may be arranged along an optical axis of the optical imaging system. For example, the illumination element 100 may be arranged besides a side surface of the objective lens 250. The optical path can be guided through mirrors between the illumination element 100 and the objective lens 250.

In an example, the illumination system 202 may comprise a light source. The illumination element 100 may be arranged along the optical path between the light source and the objective lens 250. For example, the first surface 110 of the illumination element 100 may face the illumination source. In this way, a setup of the illumination system 202 can be facilitated.

In an example, an emitting surface of the light source may have the same dimension as the first surface 110 of the illumination element 100. In this way, the illumination element 100 can be adapted to the illumination source, e.g., a loos of light can be reduced.

For example, the illumination element 110 may be formed rectangular with an entrance surface 110 (i.e., the first surface), that may fit to an exitance surface of an illumination source (not shown), e.g., a light emitting diode. The exit surface 120 (i.e., the second surface) of the illumination element 110 may be designed rectangular as well, while the size of the exit surface 120 may be selected according to the necessary radiant distribution. For example, an aspect ratio of the exit surface 120 may depend on an aspect ratio of a display device. The surfaces 130 between the entrance surface 110 and exit surface 120 (i.e., the lateral surface) may be parabolic shaped.

As can be seen in Fig. 2b, in an example, the illumination system 204 may comprise a further illumination element 212. The illumination element 200 and the further illumination element 212 may be arranged at the same position along an optical axis of the optical imaging system and for respectively reducing a deviation from the optical axis. For example, the illumination element 200 and the further illumination element 212 may be arranged next to each other in such a way that a distance of the respective center points to the optical path is reduced, e.g., reduced to a minimum. In this way, it can be ensured that the illumination element 200 and the further illumination element 212 are as close as possible to the optical path.

The transmitted formed light beam may be then sent through the objective lens 252 to ensure a concentric illumination in the object field. As can be seen in Fig. 2b several illumination elements 200, 212 can be combined to an illumination lens array if several illumination sources, e.g., light emitting diodes, need to be mixed (e.g., white light, excitations light). Fig. 2b also shows an example, where the illumination pupils partly overlap with the focus pupils (or imaging pupils) to ensure an illumination even within in a deep cavity. For example, the illumination element 200 and the further illumination element 212 are arranged to reduce a deviation to an optical axis.

The illumination system 204 may optionally comprise a beam splitter 260 to direct the light beam reflected from the sample.

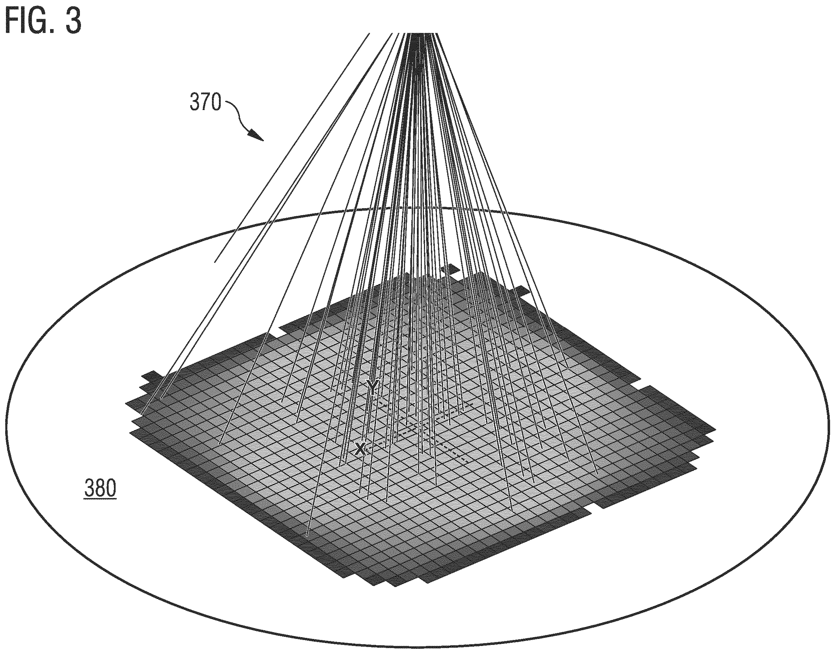

More details and aspects are mentioned in connection with the examples described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 4).

Fig. 3 shows a simulation of a light distribution 370 in an object field 380 using an illumination element according to Fig. 1 or an illumination system according to Fig. 2. As can be seen in Fig. 3, the simulated light distribution 370 in the object field 380 may be substantially rectangular. The simulation is based on an illumination element as described above, e.g., with reference to Fig. 1.

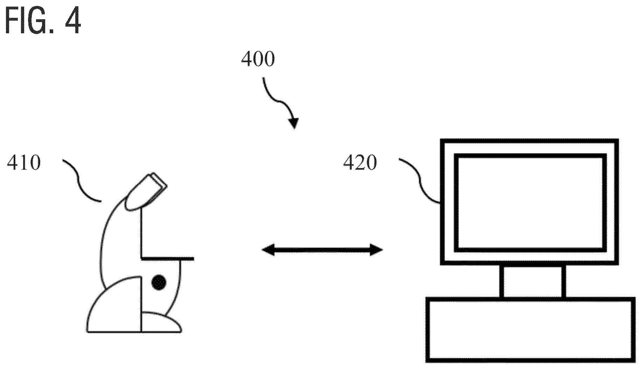

More details and aspects are mentioned in connection with the examples described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4).

Some embodiments relate to a microscope comprising an illumination element as described in connection with the Fig. 1. Fig. 4 shows a schematic illustration of a system 400 configured to acquire an image of a sample. The system 400 may be an optical imaging system. In an example, the optical imaging system may comprise an illumination element as described with reference to Fig. 1 or an illumination system as described with reference to Fig. 2. In an example, the optical imaging system may be a stereoscopic surgical microscope. The system 400 comprises a microscope 410 and a computer system 420. The computer system may comprise an apparatus. The apparatus may be tasked with controlling various aspects of a microscope of the optical imaging system, which may be a surgical optical imaging system, and of the entire optical imaging system and/or with processing various types of sensor data of the optical imaging system. Consequently, the apparatus may be implemented as a computer system, which interfaces with the various components of the optical imaging system, e.g., the illumination source.

The microscope 410 is configured to take images and is connected to the computer system 420. The computer system 420 is configured to execute at least task related to the microscope, e.g., control an illumination source. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

More details and aspects are mentioned in connection with the examples described above. The example shown in Fig. 4 may comprise one or more optional additional features corresponding to one or more aspects mentioned in connection with the proposed concept or one or more examples described above (e.g., Fig. 1 - 3).

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A Further,embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A Further, embodiment of the present invention is an apparatus as described herein comprising a processor and the storage medium.

A Further,embodiment of the invention is, therefore, a data stream or a sequence of signals representing the computer program for performing one of the methods described herein. The data stream or the sequence of signals may, for example, be configured to be transferred via a data communication connection, for example, via the internet.

A Further,embodiment comprises a processing means, for example, a computer or a programmable logic device, configured to, or adapted to, perform one of the methods described herein.

A Further,embodiment comprises a computer having installed thereon the computer program for performing one of the methods described herein.

A Further,embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 illumination element
110 first surface
120 second surface
130 lateral surface
200 illumination element
202 illumination system
204 illumination system
212 illumination element
250 objective lens
252 objective lens
260 beam splitter
370 light distribution
380 object field
400 system
410 microscope
420 computer system

## Claims

1. An illumination element (100) for an optical imaging system, comprising
a first surface (110) configured to receive a light beam;
a second surface (120) opposing the first surface (110) configured to transmit a formed light beam, an area of the second surface is greater than an area of the first surface; and
a lateral surface comprising a plurality of surface points, wherein at a cross section a distance of at least two surface points of the plurality of surface points to a center point of the lateral surface is different from each other.

2. The illumination element (100) according to claim 1, wherein
a shape of the cross section is non-circular.

3. The illumination element (100) according to any one of the preceding claims, wherein
a shape of the cross-section is substantially rectangular.

4. The illumination element (100) according to any one of the preceding claims, wherein
a perimeter of the cross section comprises a discontinuity.

5. An illumination element (100) for an optical imaging system, comprising:
a first surface (110) configured to receive a light beam;
a second surface (120) opposing the first surface (110) configured to transmit a formed light beam, an area of the second surface is greater than an area of the first surface; and
a lateral surface (130), wherein a shape of the lateral surface (130) is configured to form the received light beam into the formed light beam such that a light distribution in the object field of an optical imaging system has two sides which are at least partially parallel.

6. The illumination element (100) according to claim 5, wherein
the light distribution exhibits a substantially rectangular shape in the object field of the optical imaging system.

7. The illumination element (100) according to any one of the preceding claims, wherein the second surface (120) has a rectangular shape.

8. The illumination element (100) according to any one of the preceding claims, wherein the lateral surface (130) has at least partially a parabolic shape.

9. The illumination element (100) according to any one of the preceding claims, wherein
the lateral surface (130) comprises at least two facets along a perimeter of the cross section or along an axial direction of the illumination element (100).

10. An illumination system (202) for an optical imaging system, comprising:
the illumination element (100) according to any one of the preceding claims; and
an objective lens (250), arranged along an optical path of the optical image system after the illumination element (100).

11. The illumination system (202) according to claim 10, wherein
the illumination element (100) and the objective lens (250) are arranged such that the light distribution of the formed light beam is concentric in the object field.

12. The illumination system (202) according to claim 11, wherein
the light distribution of the formed light beam is concentric in the object field for different working distances of the optical imaging system.

13. The illumination system (202) according to any one of claims 10-12, wherein
the illumination element (100) is arranged in a line along the optical path.

14. The illumination system (202) according to any one of claims 10-13, comprising
a light source, wherein the illumination element (100) is arranged along the optical path between the light source and the objective lens (250).

15. An optical imaging system (400), comprising:
an illumination element (100) according to any one of claims 1-9 or an illumination system (202) according to any one of claims 10-14.
